# EUROPEAN PATENT APPLICATION

(11) **EP 3 505 602 A1**
(43) Date of publication of application: **03.07.2019**
(21) Application number: 17211126.2
(22) Date of filing: 29.12.2017
(51) Int. Cl.: C10J 3/48, C10J 3/72, C10J 3/84, C10K 1/02, B01D 33/06

(54) **GASIFICATION SYSTEM**

(71) Applicant: Meva Energy AB, 422 46 Hisings Backa (SE)
(72) Inventor: WINGREN, Anders, 245 63 HJÄRUP (SE); ÖHMAN, Rikard, 946 40 SVENSBYN (SE); STRANDBERG, Niklas, 471 62 HÖVIKSNÄS (SE)
(74) Representative: AWA Sweden AB

(57) **Abstract**

The present invention relates to a gasification system and a method for gasifying carbonaceous material in order to produce synthesis gas. The system has a gasification reactor which is configured to generate synthesis gas that is to be moved through a wet scrubber in order to cool the gas and remove unwanted residues. The scrubbing step results in the generation of a tar-and-water reject which is injected into a separation device having a perforated surface and where the separator device is configured to allow the tar-and-water liquid reject to travel of the perforated surface. Hereby presenting a gasification system capable of efficiently handling the problems associated with tar-and-water reject resulting from the scrubbing step in a cost effective and time efficient manner.

## Description

### TECHNICAL FIELD OF THE INVENTION

The present invention generally relates to conversion of carbonaceous materials into desirable gaseous products such as synthesis gas. More specifically, the present invention relates to a subsystem or support system for separating water from tar and other reject material suitable for use in a gasification system in which carbonaceous materials are converted into synthesis gas in a pyrolysis process.

### BACKGROUND

Gasification can be described as a process where organic or fossil fuel based carbonaceous materials are converted into a product gas of varying molecular weights, such as e.g. carbon monoxide, hydrogen and carbon dioxide. This is generally achieved through a thermo-chemical reaction where the carbonaceous materials react with a controlled amount of oxygen, steam and/or carbon dioxide acting as an oxidant, the resulting product gas mixture is often called synthesis gas (also known as synthetic gas or syngas).

The synthesis gas can later be used as a fuel gas where it is burned directly as fuel to produce heat and/or electric power or as an intermediate for other multiple uses. The power derived from gasification of bio-based feedstock is considered to be a source of renewable energy and the gasification industry has attracted a lot of interest during these last decades.

Further, gasification differs from other, more traditional energy-generating processes, in that it is not a combustion process, but rather a conversion process. Instead of the carbonaceous feedstock being wholly burned in air to create heat, the feedstock to be gasified is incompletely combusted to create the syngas which then at a later stage is completely combusted in order to release the remaining energy. The atmosphere within the chamber is deprived of oxygen, and the result is complex series of reactions of the "feedstock" to produce synthesis gas. The synthesis gas can be cleaned relatively easily, given the much lower volume of raw synthesis gas to be treated compared to the large volume of flue gases that need to be treated in conventional post-combustion cleaning processes. In fact, gasification systems used today are already able to clean synthesis gas beyond many environmental requirements. The clean synthesis gas can subsequently be combusted in turbines or engines using higher temperature (more efficient) cycles than the conventional steam cycles associated with burning carbonaceous fuels, allowing possible efficiency improvements. Further, synthesis gas can also be combusted in burners, for instance when a heat consuming industry wants to replace an existing consumption of fossil gases. Synthesis gas can also be used in fuel cells and fuel cell-based cycles with yet even higher efficiencies and exceptionally low emissions of pollutants. The (energy) efficiency of a gasification system is often measured in terms of cold gas efficiency (CGE) which is the he ratio between the chemical energy in the product gas compared to the chemical energy in the fuel.

Nevertheless, even with the positive environmental aspects there is still a need for increased efficiency as well as a facilitation in terms of operation and maintenance.

The produced synthesis gas contains carbonaceous species that are generally classified as tars, such as e.g. naphthalene, antracene, indene, pyrene, etc. also referred to as polycyclic aromatic hydrocarbons (PAHs). These tars are very problematic due to their high viscosity and tendency to attach to any surface it comes in contact with and thereby clog piping or cause damage to other equipment. The problems associated with tar have caused a lot of concern in many gasification systems and it severely affects the operational reliability and the overall energy efficiency of the system. Moreover, the synthesis gas contains other particulate contaminants in the form of solid particles (e.g. ash, dust, unburned residues, and soot) which are undesirable in the end product.

More specifically, the general process includes a step where these tars and contaminants are separated from the syngas, conventionally by means of a wet scrubber which cools and "scrubs" the raw syngas by allowing droplets of separated matter and scrubbing liquid (e.g. water) to precipitate in the scrubber and thereby decrease tar and particle concentrations. However, in this scrubbing step, a tar-and-water reject is formed which is in need of processing. More specifically, it would be desirable to separate the water from the other substances (e.g. tar, dust, ashes) in the reject in order to provide the possibility of reusing the water in the gasification process and thereby increase the overall efficiency and reduce costs. Moreover, the separated tar may be reused as fuel in a tar cracking process.

Conventionally this separation may be performed by sedimentation, however, such solutions require one or more relatively large sedimentation tanks and consequently also large amounts of circulating water to be available due to the sedimentation process being inherently slow. In other words, such solutions are relatively costly and also complex due to the complicated processes related to the removal of the accumulated waste.

Thus, there is a need in the gasification industry for a new and improved system where the tar and water separation after the scrubbing step can be done in a fast and efficient manner.

### SUMMARY OF THE INVENTION

It is accordingly an object of the present invention to provide a gasification system and a method for gasifying carbonaceous material which alleviates all or at least some of the above-discussed drawbacks of presently known systems. In more detail it is an object of the present invention to provide for a gasification system and method with improved handling of the tar-and-water reject in order to achieve a more cost effective and efficient overall system as compared to the prior art.

This object is achieved by means of a gasification system and method as defined in the appended claims.

The term exemplary is in the present context to be understood as an example, instance or illustration.

According to a first aspect of the present invention, there is provided a gasification system for conversion of carbonaceous materials into synthesis gas, where the gasification system comprises:
a gasification reactor having at least one fuel-inlet for injecting carbonaceous fuel and oxidant into the gasification reactor whereby, in a thermo-chemical reaction, synthesis gas is generated, said synthesis gas having a solid particle content;
wherein the gasification reactor further has a syngas exit pipe via which the synthesis gas is extracted from the gasification reactor;
a wet scrubber for receiving the synthesis gas from the syngas exit pipe, the wet scrubber being arranged to direct the synthesis gas through a water mist in order to remove tar from the synthesis gas thereby generating a tar-and-water liquid reject;
a separator device for receiving the tar-and-water liquid reject, the separator device comprising a perforated surface having a plurality of perforations, wherein the separator device is configured to allow the tar-and-water liquid reject to travel over said perforated surface .

Hereby presenting a gasification system capable of efficiently handling the problems associated with tar-and-water reject resulting from the scrubbing step in a cost effective and time efficient manner. Moreover, the whole system can be quite compact since the need for large amounts of circulating water is at least partly mitigated. Thus, in accordance with an exemplary embodiment of the present invention, the gasification system further comprises a circulation circuit arranged to feed water extracted by/from the separator device to the wet scrubber.

Further, the gasification reactor may for example be an entrained flow gasification reactor having a curved inner surface and where the at least one fuel-inlet is arranged to concurrently inject carbonaceous fuel and oxidant. It was realized by the present inventors, that entrained flow reactors are suitable in the present system since the extracted synthesis gas inherently has a ratio of solid particle content which is well suited for tar-and-water separation by means of a sieve-like device. An example of an entrained flow gasification reactor is a cyclone reactor as for example disclosed in EP 3 078 727, by the same applicant, Meva Energy AB, incorporated herein by reference.

The present invention is at least partly based on the realization that it is possible to achieve a compact and cost effective means for handling the tar-and-water reject resulting from a wet scrubbing process by utilizing the fact that the generated syngas contains solid particles which can be used to aggregate the tar components of the syngas so to enable tar-and-water separation by means of sieving at a later process step. As mentioned, the inventive system alleviates some of the problems associated with conventional solutions (particularly solutions relying on sedimentation) which are prone to some general drawbacks in terms of system size and large water volume requirements in addition to the fact that they are inherently slow.

Further, the present inventors realized that while mechanical separation may be beneficial in order to reduce system size, any solution where substantial pressure or force is exerted on the tar (e.g. cyclone separators) is inefficient and often resulted in clogging or inadequate separation due to the liquefaction of the tar components due to the applied pressure/force. Thus, by merely allowing the tar-and-water reject to pass over a perforated surface, without exerting any external force or pressure on the reject slurry, an efficient means for tar and water separation is achievable. In more detail, the sieving process is at least partly enabled by having a solid particle content within a specific range (or at least above a specific threshold) in the generated synthesis gas and consequently in the generated tar-and-water reject. As mentioned, the tar components in the tar-and-water reject will stick to the solid particles and aggregate wherefore the tar components can be separated from the water in the reject.

Therefore, in accordance with an exemplary embodiment of the present invention, the wet scrubber is arranged to generate said tar-and-water reject having a solid particle content in the range of 2-20 gram/liter (g/l). Accordingly, the system may comprise means for measuring the solid particle content in the tar-and-water reject and then appropriate means for adjusting the solid particle content by either adding or removing solid particles to/from the tar-and-water reject. The solid particle content in the reject may for example be controlled by controlling the solid particle content in the produced synthesis gas (e.g. by using different gasification process, adding/removing filters, etc.). This may be considered counter-intuitive since in general one would aim to provide a gasification reactor which produces a clean synthesis gas (i.e. without residual solid particles). Alternatively, the rate of water ejected in the scrubber may be controlled in order to dilute or concentrate the solid particle concentration in the resulting tar-and-water reject.

Moreover, in accordance with an exemplary embodiment of the present invention, the gasification reactor is arranged to generate a synthesis gas comprising solid particles and tar, wherein a ratio of said solid particles is in the range of 0.1 gram - 2.0 gram per gram tar in the synthesis gas, preferably in the range of 0.1 gram - 1.0 gram per gram tar. In more detail, the solid particle content in relation to the tar content in the produced synthesis gas can for example be controlled by controlling the gasification process in the gasification reactor: using different types of gasification methods, such as e.g. up draft gasifiers, down draft gasifiers, fluidized bed reactors, entrained flow gasifiers, plasma gasifiers etc. and/or by controlling various parameters such as fuel injection rate, fuel type, oxidant injection rate, reactor temperature, etc., Further, in accordance with an exemplary embodiment of the present invention, the perforated surface of the separator device is a curved surface. This is in order to reduce the foot print of the separator device, and accordingly reduce the overall system size. For example, the separator device may comprise a cylindrical body whose enveloping surface is perforated. In this case, the separator device may be arranged such that the central axis of the cylindrical body extends in parallel with a horizontal plane, or is slightly tilted relative to this horizontal position. In reference to the latter, the tar-and-water reject can then be poured into an elevated end portion where it will slide down along the perforated surface (due to gravitational pull) towards the lower end portion. Naturally, the perforated surface may be arranged as a half-pipe or any other suitable shape.

Moreover, the separator device may be arranged to move the perforated surface. For example, in reference to the embodiment where the separator device has a cylindrical body whose central axis is tilted from a straight horizontal position, the cylindrical body may be pivoted about the central axis or even rotated about the central axis in order to increase the total travel distance along the perforated surface for the tar-and-water reject while it travels from a first elevated end portion of the cylindrical body towards the lower opposite end. Thus, draining (water content removal) can be improved without adding length to the cylindrical body in order to increase the travel distance. It goes without saying that rotation of the cylindrical body will result in some centripetal/centrifugal force being exerted on the reject. However, it is readily understood by the skilled reader that the rotational speed is kept below a threshold so to not cause clogging due to a substantial force being exerted on the liquid reject whereby the tar would begin to liquefy and clog the perforations.

Thus, in accordance with another exemplary embodiment of the present invention, the separator device comprises a (rotatable) drum screen, and wherein the perforated surface is an enveloping surface of the rotatable drum screen. By using a rotatable drum screen the footprint of the separating device is kept small, and the extraction/removal of solid substances (such as e.g. tar) as well as cleaning of the device is simplified. Moreover, the accumulated tar waste can continuously be removed due to the geometry of the drum screen separator.

Furthermore, in accordance with yet another exemplary embodiment the drum screen has a first end portion and a second end portion, the drum screen being arranged to receive the tar-and-water reject at the first end portion and discharge tar at the second end portion, the discharged tar having a reduced amount of water content as compared to the tar-and-water reject received at the first end portion. In more detail, the tar-and-water reject is injected at the first end and allowed to travel along the perforated enveloping surface of the drum screen whereby water is drained from the reject via the small perforations and the solid content keeps traveling until it reaches the second end portion where it is extracted. The rotatable drum screen can be shaken/vibrated and/or rotated in order to improve the draining effect. Thus, in some exemplary embodiments the drum screen is a rotatable drum screen.

Even further, in accordance with another exemplary embodiment of the present invention, the rotatable drum screen has an inner (spiraling) thread extending from the first end portion to the second end portion, and wherein the rotatable drum screen is configured to be rotated about its central axis.

The inner thread can be understood as an inner partition wall arranged on the inner side of the enveloping surface and spiralling along a length of the drum screen. The inner thread enables the drum screen to be used while in a straight horizontal position (i.e. central axis extends in parallel to a horizontal ground plane) since a rotation of the screen will move the tar and water reject on perforated enveloping surface along the spiraling path formed by the thread.

In accordance with another aspect of the present invention there is provided a method for gasifying carbonaceous material comprising:
injecting a carbonaceous fuel and oxidant into a gasification reactor whereby, in a thermo-chemical reaction, synthesis gas having a solid particle content is generated;
extracting the synthesis gas from the gasification reactor;
cooling and scrubbing the synthesis gas (e.g. by means of a wet scrubber) such that a tar-and-water rejected comprising tar and water is formed, wherein the tar-and-water reject further comprises particulate residues;
separating water from the tar-and-water reject by sieving.

With this aspect of the invention preferred features and advantages of the invention are present as in the previously discussed first aspect of the invention, and vice versa. For example, the step of injecting carbonaceous fuel and oxidant into a gasification chamber may be done such that a synthesis gas is generated, which synthesis gas comprises solid particles and tar, wherein a ratio of said solid particles is in the range of 0.1 g - 2.0 g per gram tar in the synthesis gas.

Further, in accordance with an embodiment of the present invention, the step of separating water from the tar-and-water reject comprises aggregating solid particulate residues and tar.

These and other features of the present invention will in the following be further clarified with reference to the embodiments described hereinafter.

### BRIEF DESCRIPTION OF THE DRAWINGS

For exemplifying purposes, the invention will be described in closer detail in the following with reference to embodiments thereof illustrated in the attached drawings, wherein:
Fig. 1 is a schematic overview illustration of a gasification system for conversion of carbonaceous materials in accordance with an embodiment of the present invention;
Fig. 2 is a perspective view of a cut-out of a separator device of a gasification system in accordance with an embodiment of the present invention;
Fig. 3 is a flow-chart representation of a method for gasifying carbonaceous material in accordance with an embodiment of the present invention.

### DETAILED DESCRIPTION

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

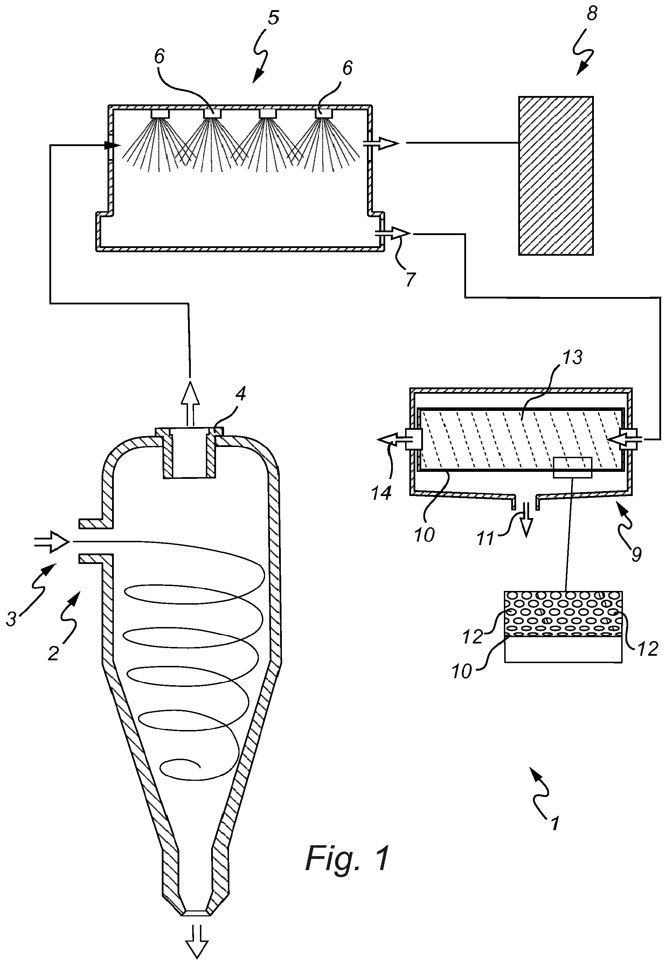

In Fig. 1 a schematic illustration of a gasification system 1 for gasifying carbonaceous material is provided. The gasification system 1 has a gasification reactor 2 (may also be referred to as a gasification chamber) having at least one fuel inlet 3. The fuel inlet(s) 3 is/are arranged for injecting carbonaceous fuel and oxidant into the gasification reactor 2. The oxidant (oxidizing agent) can for example be air, oxygen, carbon dioxide or steam while the carbonaceous fuel can for example be one or more of the following: biomass, biofuel, coal, wood, agricultural residues such as e.g. husk, digestate, manure, dewatered waste water, barch, straw, peat, fibre residue (having a diameter of less than 3000 µm, preferably less than 2000 µm and most preferably less than 1000 µm). The injected carbonaceous fuel and the oxidant are then converted to synthesis gas via a thermo-chemical reaction.

The gasification reactor 2 can for example be made of a ceramic material, and have a height in the range of 2000 mm to 6000 mm. The gasification reactor 2 is shown in a cross-sectional view, the cross section taken in a plane including the elongated axis of the reactor (i.e. z-axis in a cylindrical coordinate system where the gasification chamber is approximated as cylinder). Further, the gasification reactor 2 is preferably of a cylindrical shape, but may be of any shape having an internal cavity without departing from the scope of the invention.

The gasification reactor 2 also has a syngas exit pipe 4, via which the generated synthesis gas is extracted from the gasification reactor 2. The synthesis gas further comprises solid particles (e.g. ash, char, fuel residues, etc.) and tar components. The syngas exit pipe 4 is at least partly arranged inside the gasification reactor 2, and it further has an opening arranged inside the gasification reactor 2 for receiving the synthesis gas. Moreover, the syngas exit pipe 4 may comprise an outer wall arranged inside said gasification chamber, and wherein the outer wall is an obstructing surface (not shown) for a swirling flow created by the injected carbonaceous fuel and oxidant. The obstructing surface is advantageous for achieving an optimal flow propagation in a cyclone gasification reactor 2.

Further, the system has a wet scrubber 5 which is arranged to receive the produced synthesis gas and direct the synthesis gas through a water mist (produced by means of the nozzles 6) to cool the gas and to remove tar components and other unwanted residues from the synthesis gas. This whole scrubbing process results in a formation of tar-and-water liquid reject (as represented by arrow 7). For example, the wet scrubber 5 can be a quench water circuit with a quench tower and a venturi scrubber, where the quench tower cools the synthesis gas (which passes through a water mist in the quench tower) in order to condense residual tar, and the venturi scrubber acts as a de-duster, removing small particulate matters and other residues such as tar components. The cleaned syngas is then ready to be used for various applications 8 such as e.g. to be combusted in turbines or engines.

The tar-and-water (liquid) reject is in turn transported (as indicated by arrow 7) to a separator device 9 which has a perforated surface 10 with a plurality of perforations 12. The separator device 9 is configured or arranged to allow the tar-and-water reject to travel over the perforated surface 10 whereby, in a sieving process, water is removed/drained from the tar-and-water reject. Preferably, the produced tar-and-water reject has a solid particle content in the range of 2-20 g/L in order to optimize the particle and tar aggregation in the separation process.

The perforated surface 10 is here in the form of a curved surface, and more particularly in the form of a drum screen 10. The drum screen 10 can be moved, e.g. vibrated, shaken and/or rotated about a central axis thereof (horizontal axis in the illustrated embodiment).

By having a drum screen 10 for the tar-and-water separation, the footprint of the separating device can be reduced and the overall system size can thereby be smaller. Also, the extraction/removal of solid substances (tar and particulate residues) is achieved in a relatively simple and efficient manner. In more detail, the extracted water will exit via the perforations and from there it may be collected in a tank or the like (as indicated by arrow 11), while the (now drained) solid residues (tar and particles) can be extracted (arrow 14) at the opposite end relative to the inlet. The drum screen 10 can be arranged in a straight horizontal manner (i.e. the elongated central axis of the drum extends in a horizontal plane), or it may be slightly tilted. In the tilted arrangement, the tar-and-water reject may be introduced at the elevated end portion whereby the reject will travel towards the other end due to the gravitational pull. The tar-and-water reject will be subjected to a sieving process while moving along the perforated surface 10. The drum screen 10 may be further provided with an inner thread 13, extending from end introducing end towards the opposite end portion. The inner spiralling thread 13 will gradually move the tar-and-water reject along the length of the drum screen 10 while the drum screen is being rotated about its central axis. This allows for having the drum screen arranged in a straight horizontal position or to introduce the tar-and-water reject at the lower end portion and allow it to travel towards the opposite elevated end portion during rotation of the drum screen 10.

Additionally, cleaning of the device can be facilitated due to the rotational capability of the drum screen 10. More specifically, a line of external (high-pressure) water nozzles (not shown) extending along the length of the drum screen may for example be provided. Accordingly, by rotating the drum screen 10 while spraying its outer surface with water the perforated surface may be kept clean and the perforations kept un-clogged. Additionally, or alternatively mechanical scrapers or brushes (not shown) may be arranged to scrape or brush against the outer side of the perforated surface 10, which can be used to remove any unwanted residues. Also here, by having a rotatable drum screen 10, the scrapers or brushes may be kept static which facilities the cleaning process.

In an effort to optimize the operational efficiency of the gasification system 1 and in particular, from a water management aspect, the gasification system may further comprise a circulation circuit (not shown) which is arranged to feed water that is extracted by the separator device 9 back to the wet scrubber 5.

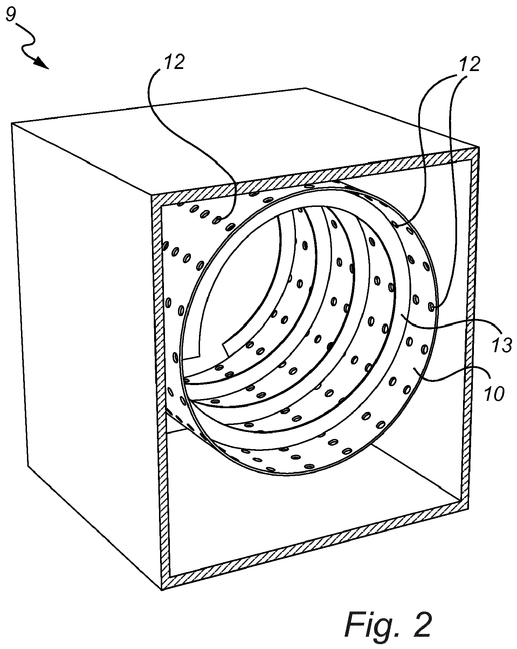

In Fig. 2, a perspective view of a partial cut-out of a separator device 9 comprising a drum screen 10, is illustrated. Here, the perforated enveloping surface of the cylindrical body of the drum screen 10 is shown as well as the inner thread 13. The inner thread 13 can be said to form a spiralling inner partition wall which will translate the tar-and-water reject axially as the drum screen rotates 10. This simplifies the whole separation process, and more over enables for a tar-and-water separation without exerting any substantial pressure onto the tar-and-water reject. This is advantageous since exerting pressure or force of the tar-and-water reject may cause the tar components to liquefy and therefore also exit/clog the perforations, which not only inhibits the water drainage but is also difficult to handle. This is generally a problem associated with conventional separation devices such as e.g. cyclone separators.

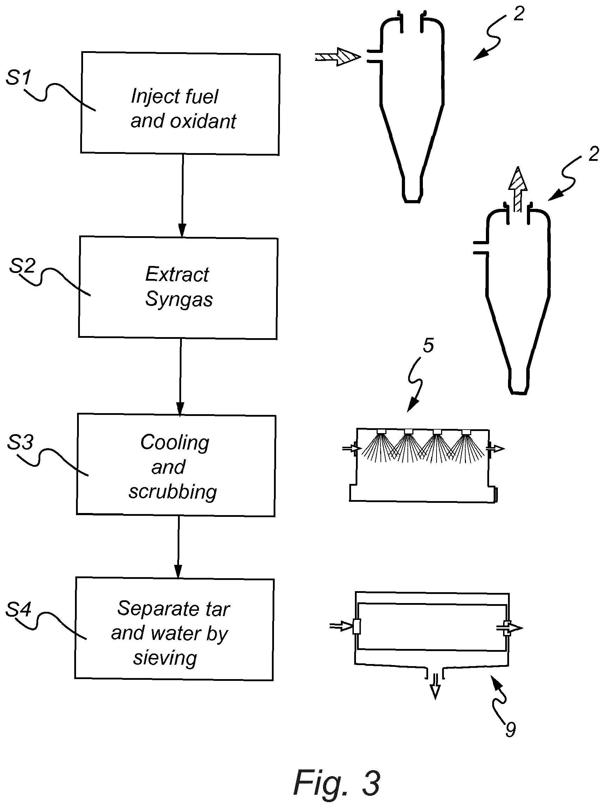

Fig. 3 is a flow-chart representation of a method for gasifying carbonaceous material in accordance with an embodiment of the present invention. The method comprises a first step of injecting S1 a carbonaceous fuel and oxidant into a gasification reactor in order to generate synthesis gas by means of a thermos-chemical reaction. Next, the produced synthesis gas is extracted S2 and subsequently cooled and scrubbed whereby unwanted residues and contaminants can be removed from the synthesis gas. In the cooling and scrubbing step, a tar-and-water reject is formed. The tar-and-water reject accordingly comprises, tar, water and particulate residues (e.g. char, ash, residual fuel, etc.). Preferably, the formed tar-and-water reject has a solid particle content in the range of 2-20 g/L.

Next, the tar-and-water reject is drained in a separation step S4, where tar and water is effectively separated in a sieving process. More specifically, the particulate residues aid to cause the tar components of the tar-and-water reject to aggregate, wherefore a sieving device can be employed in order to quickly and efficiently separate the tar from the water. The gasification reactor may for example be an entrained flow reactor, such as e.g. a cyclone gasifier, such that the fuel is injected concurrently into the gasification reactor such that an entrained flow is formed in the gasification reactor.

Even though the invention has been described with reference to specific exemplifying embodiments thereof, many different alterations, modifications and the like will become apparent for those skilled in the art. Variations to the disclosed embodiments can be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

## Claims

1. A gasification system for conversion of carbonaceous materials into synthesis gas, said gasification system comprising:
a gasification reactor having at least one fuel-inlet for injecting carbonaceous fuel and oxidant into said gasification reactor whereby, in a thermo-chemical reaction, synthesis gas is generated, said synthesis gas having a solid particle content;
wherein said gasification reactor further has a syngas exit pipe via which said synthesis gas is extracted from the gasification reactor;
a wet scrubber for receiving the synthesis gas from said syngas exit pipe, said wet scrubber being arranged to direct the synthesis gas through a water mist in order to remove tar from said synthesis gas thereby generating a tar-and-water liquid reject;
a separator device for receiving the tar-and-water liquid reject, said separator device comprising a perforated surface having a plurality of perforations, wherein said separator device is configured to allow said tar-and-water liquid reject to travel over said perforated surface.

2. The gasification system according to claim 1, wherein said perforated surface of the separator device is a curved surface.

3. The gasification system according to claim 1 or 2, wherein said separator device is configured to move said perforated surface.

4. The gasification system according to any one of the preceding claims, wherein said synthesis gas further has a tar content, and wherein a ratio of solid particles is in the range of 0.1 gram - 2.0 gram per gram tar.

5. The gasification system according to any one of the preceding claims, wherein said wet scrubber is arranged to generate said tar-and-water reject having a solid particle content in the range of 2-20 gram/liter.

6. The gasification system according to any one of the preceding claims, wherein said separator device comprises a drum screen, and wherein said perforated surface is an enveloping surface of said rotatable drum screen.

7. The gasification system according to claim 5, wherein said drum screen has a first end portion and a second end portion, said drum screen being arranged to receive said tar-and-water reject at the first end portion and discharge tar at the second end portion, said discharged tar having a reduced amount of water content as compared to the tar-and-water reject received at the first end portion.

8. The gasification system according to claim 5 or 6, wherein said drum screen is configured to be shaken.

9. The gasification system according to any one of claims 5-7, wherein said drum screen is a rotatable drum screen.

10. The gasification system according to claim 8, wherein said rotatable drum screen has an inner thread extending from said first end portion towards said second end portion, and wherein said rotatable drum screen is configured to be rotated about its central axis.

11. The gasification system according to any one of the preceding claims, wherein said gasification reactor is an entrained flow gasification reactor having a curved inner surface and wherein said at least one fuel-inlet is arranged to concurrently inject carbonaceous fuel and oxidant.

12. The gasification system according to any one of the preceding claims, further comprising a circulation circuit arranged to feed water extracted by said separator device to said wet scrubber.

13. A method for gasifying carbonaceous material comprising:
injecting a carbonaceous fuel and oxidant into a gasification reactor whereby, in a thermo-chemical reaction, synthesis gas having a solid particle content is generated;
extracting said synthesis gas from said gasification reactor;
cooling and scrubbing said synthesis gas such that a tar-and-water rejected comprising tar and water is formed, wherein said tar-and-water reject further comprises particulate residues;
separating water from said tar-and-water reject by sieving.

14. The method according to claim 12 wherein said particulate residues and said tar aggregate during said step of separating water from said tar-and-water reject.

15. The method according to claim 12 or 13, wherein said carbonaceous fuel and oxidant is injected concurrently into said gasification reactor such that an entrained flow is formed, and wherein said formed tar-and-water reject has a solid particle content in the range of 2-20 gram/liter.
